# EUROPÄISCHE PATENTSCHRIFT

(11) **EP 2 275 351 B1**
(45) Veröffentlichungstag und Bekanntmachung des Hinweises auf die Patenterteilung: **02.01.2013**
(21) Anmeldenummer: 10006836.0
(22) Anmeldetag: 01.07.2010
(51) Int. Cl.: B65B 7/16, B65B 43/46, B65G 25/02, B65G 47/90

(54) **Schalenverschließmaschine**
Traysealer
Machine de fermeture de barquettes

(30) Priorität: 06.07.2009 DE 202009009242 U
(43) Veröffentlichungstag der Anmeldung: 19.01.2011
(73) Patentinhaber: Multivac Sepp Haggenmüller GmbH & Co. KG, 87787 Wolfertschwenden (DE)
(72) Erfinder: Wagner, Christoph, 87724 Ottobeuren (DE); Negele, Wolfgang, 87724 Ottobeuren (DE)
(74) Vertreter: Grünecker, Kinkeldey, Stockmair & Schwanhäusser

(56) Entgegenhaltungen:
- EP-A1- 1 215 144
- EP-A1- 2 141 095
- WO-A1-2007/049145
- WO-A1-2007/107703

## Beschreibung

Die vorliegende Erfindung bezieht sich auf eine Schalenverschließmaschine gemäß dem Oberbegriff von Anspruch 1.

Aus der Praxis sind Schalenverschließmaschinen bekannt, auf denen mit Produkt gefüllte Schalen über Transportbänder von einem Zuführband der Maschine so aufgenommen werden, dass eine Gruppe von Schalen, die in einem Arbeitstakt verarbeitet werden, so auf dem Zuführband zum Liegen kommen, dass sich die Gruppe von Schalen ausgerichtet, in einem definierten Abstand zueinander und einer vorgesehenen Position zu einem Greifersystem befindet.

Es besteht ein direkter Zusammenhang zwischen Abmessungen der Schalen und Schalenaufnahmen an Greiferarmen des Greifersystems. Bei einem Umrüsten der Schalenverschließmaschine auf eine neue Charge von Schalen, werden auch die Greiferarme bzw. Schalenaufnahmen gewechselt.

Es gibt sowohl Systeme mit Kraftschluss als auch mit Formschluss zwischen Schale und Schalenaufnahme. Kraftschluss findet vor allem dort eine Anwendung, wo die Schalen nach der Aufnahme zum Weitertransport vom Zuführband angehoben werden. Der Formschluss wird vor allem zum Schieben einer Gruppe von Schalen verwendet.

So zeigt die internationale Patentanmeldung WO 2007/107703 A1 eine Schalenverschließmaschine mit einem Greifersystem mit zwei Greiferarmen, die gegenüberliegende Ausnehmungen aufweisen, die dazu ausgelegt sind an Schalen einzugreifen.

Aus der internationalen Patentanmeldung WO 2007/049145 A1 ist ein Handhabungssystem für Container bekannt, das in Industriebetrieben für das Befüllen und Versiegeln der Container eingesetzt werden kann. Darin ist ein Haltesystem für die Container offenbart, das gegenüberliegende Greiferarme aufweist, deren Abstand zueinander so variiert werden kann, dass ein Container dazwischen ergriffen werden kann.

Aus der europäischen Patentanmeldung EP 1 ,215 144 A1 ist ein Fördermittel für verschweißte Faltpackungen bekannt, wobei ein Halte- und Fördermittel offenbart wird, das gegenüberliegende Paare von Armen aufweist, die reibschlüssig an gegenüberliegenden Seiten eines quaderförmigen Behälters angreifen.

Bei Maschinen mit sehr hoher Taktleistung (Anzahl zu produzierender Packungen pro Minute) und vielen Schalen in einer Gruppe, muss das Zuführband zur Aufnahme und Gruppieren der Schalen oft und extrem beschleunigt werden. Dabei kann es zu einem geringen Verrutschen und/oder Verdrehen der Schalen auf dem Zuführband, welches für maximale Haftreibung beschichtet ist oder selbst aus einem hierfür geeigneten Material besteht, kommen. In Folge kann es bei einem schnellen Schließen der Greiferarme dazu kommen, dass Schalen in einer verschobenen oder verdrehten Position von der Schalenaufnahme am Greiferarm so in eine Arbeitsstation z.B. zum Aufsiegeln und Schneiden einer Deckelfolie transportiert werden, dass es zum Zerquetschen dieser Schalen im Bearbeitungswerkzeug kommt. Somit werden nicht verwendbare Packungen produziert, die zum Einen ausgeschleust werden müssen, welches sich nachteilig auf den Produktfluss für eine weitere Verarbeitung auswirken kann und zum Anderen kann es zu Beschädigungen des Bearbeitungswerkzeuges der Arbeitsstation kommen und somit zu Kosten und Maschinenstillstand führen.

Als weiteres Problem kann es sich ergeben, dass durch für eine sehr hohe geforderte Taktleistung notwendigen Beschleunigungen und Geschwindigkeiten für den Transport einer Gruppe von Schalen vom Zuführband in die Arbeitsstation vor allem hohe Schalen dazu neigen, durch die Reibung des Schalenbodens auf dem Zuführband während der Transportbewegung innerhalb der Schalenaufnahmen zu kippen, wenn das Zuführband langsamer läuft oder sogar zeitweise stillsteht.

Dies kann zu einem Herausfallen von Produkten führen oder bei flüssigen Produkten zu einem Überschwappen. Es ist auch ein komplettes Umkippen z.B. der letzten Schale denkbar, die dabei von den Schalenaufnahmen nicht mehr mitgenommen wird und somit ein Maschinenstillstand für die Beseitigung dieses Fehlers notwendig wird, um diese Schale aus dem betroffenen Bereich zu entfernen. Zusätzlich kann es auch dazu kommen, dass eine in der Schalenaufnahme bis in die Arbeitsstation transportierte Schale in einer fehlerhaften Position gegenüber dem Bearbeitungswerkzeug freigegeben wird und es z.B. zum Zerquetschen der Schale kommt und/oder zum Schaden am Bearbeitungswerkzeug.

Es ist Aufgabe der Erfindung eine Möglichkeit zu schaffen, nicht exakt in Position und Ausrichtung befindliche Schalen einer bereits auf dem Zuführband gruppierten Gruppe von Schalen zum Weitertransport in die Arbeitsstation hinsichtlich der für die Schalenaufnahme am Greiferarm notwendigen Position und Ausrichtung zu korrigieren, aufzunehmen und/oder ein Verkippen der Schale während der Transportbewegung zu verhindern.

Diese Aufgabe wird gelöst durch eine Schalenverschließmaschine mit den Merkmalen des Anspruchs 1, in dem für eine Aufnahme von mindestens einer Schale wenigstens eine obere und eine untere Schalenaufnahme an einem Greiferarm zum formschlüssigen Erfassen der Schale definiert ist.

Vorteilhafte Weiterbildungen sind in den Unteransprüchen angegeben.

Durch die Realisierung von einer zusätzlichen Schalenaufnahme je Greiferarm, können diese mindestens zwei Schalenaufnahmen mit unterschiedlichen Funktionen belegt werden. Eine untere Schalenaufnahme kann mit einer Kontur versehen werden, die vorzugsweise zwei Schrägen aufweist, die während einer seitlichen Annäherung an die Schale während der Schließbewegung der Greiferarme dafür sorgen, dass sich die Schale dabei einer vorgesehenen und notwendigen Position und Ausrichtung teilweise oder ganz annährt. Unter Position ist die Lage in Längs- und Querrichtung und unter Ausrichtung Lage im Winkel zu verstehen.

In geschlossener Stellung der Greiferarme befinden sich die zwei Schalenaufnahmen mit der Schale mittels Formschluss im Eingriff. Die obere Schalenaufnahme nimmt einen formstabilen Rand der Schale auf eine Weise auf, bei der eine Seite und dazugehörige Ecken bzw. Rundungen zu den jeweils anschließenden Seiten des Randes der Schale formschlüssig von der Schalenaufnahme erfasst wird und die Schale somit in Position und Ausrichtung zentriert ist. Die Vorraussetzung, dass die Abweichungen in Position und Ausrichtung für die obere Schalenaufnahme klein sind, erfüllt hierzu die o.g. untere Schalenaufnahme, die in diesem Fall früher mit der Schale in Kontakt kommt.

Die untere Schalenaufnahme liegt in geschlossener Stellung der Greiferarme mit einer zur Seitenwand der Schale parallelen Kante an dieser formschlüssig an. Die Positionierung der Schalenaufnahmen bzw. des Greiferarms kann mittels Servoantrieb ausgeführt sein.

Eine nun in zweifacher Form vorliegender Formschluss im Bereich des Schalenrandes und im unteren Bereich der Schale sorgt weiterhin für die Verhinderung eines Kippmoments auf die Schale, bedingt durch die Reibung des Packungsbodens gegenüber dem langsamer laufenden oder stillstehenden Zuführband.

Bei einspurigen Systemen ist es vorteilhaft beidseitig zur Schale je einen Greiferarm mit einer oberen und einer unteren Schalenaufnahme zu verwenden, um einen bestmöglichen Formschluss und eine prozesssichere Zentrierung durch die untere Schalenaufnahme zu erreichen.

Besonders vorteilhaft ist es, wenn sich die gegenüberliegenden Schalenaufnahmen an den Greiferarmen in gleicher Weise aufeinander zu bewegen, vorzugsweise durch eine mechanische Abhängigkeit oder einzeln gesteuerter Servoantriebe.

Eine vorteilhafte Kombination von Zuführband, Arbeitsstation, Ausführband und Schalenaufnahmen ist, wenn sich alle in einer parallel zueinander liegenden gemeinsamen Ebene befinden. Dies vereinfacht die Bauweise und verhindert eine allgemeine Schräglage der Schale, welches bei bis zum oberen Rand mit Produkt gefüllter Schale zu einem Produktverlust führen kann. Des Weiteren ist aber jede Kombination von Schalenaufnahmen je Greiferarm auch zum gegenüberliegenden Greiferarm ist hier denkbar.

Um für den gewünschten Formschluss im oberen Bereich der Schale zu sorgen, ist es vorteilhaft, den Rand der Schale aufzunehmen, da dieser durch seine üblicherweise nach außen gestülpte Form die größte Stabilität der Schale aufweist.

Befindet sich die untere Schalenaufnahme im unteren Bereich der Schale, so entsteht ein großer Abstand zwischen der oberen und unteren Schalenaufnahme. Bei Auftreten von Kräften bzw. einem Kippmoment auf die Schale durch die Reibung des Schalenbodens am Zuführband, können diese durch die auseinanderliegenden und übereinander zweifachen Schalenaufnahmen mittels Formschluss dem Kippmoment entgegenwirken und ein Verkippen der Schale verhindern.

Es ist auch denkbar, dass nur die obere Schalenaufnahme oder die obere und die untere Schalenaufnahme die Funktion zur Korrektur von Position und Ausrichtung vor dem Formschluss erfüllen könnten. In einer vorteilhaften Form übernimmt die untere Schalenaufnahme diese Funktion.

Aus der Praxis sind Schalenaufnahmen bekannt, die aus Aluminium bestehen und in die Rillen in der Ebene des Schalenrandes eingefräst sind. Diese Variante ist in der Fertigung aufwendig und erhöht die Masse des Greiferarms, dies wiederum kann die Beschleunigungen und Geschwindigkeiten der im Greifersystem auftretenden Bewegungen begrenzen. Für einen Formschluss mit der Schale kann eine Schalenaufnahme in Form eines gebogenen Bleches oder eines gelasertes Bleches vorzugsweise aus Edelstahl vorgesehen sein. Hier ist die besonders hygienische Ausführung und die günstige Fertigungsmöglichkeit hervorzuheben, da keine schwer reinigbare Rillen vorhanden sind.

Um sich unterschiedlichen Abmessungen der Schale mit den Schalenaufnahmen anpassen zu können, ohne die selbst in einem Umrüstvorgang ersetzen zu müssen, ist es vorteilhaft wenigstens eine Schalenaufnahme verstellbar am Greiferarm auszuführen.

Bei einer Ausführung der Schalenaufnahmen aus gebogenen Blech, kann die obere und untere Schalenaufnahme einteilig ausgeführt sein.

Vorteilhafterweise kommt die obere Schalenaufnahme gegenüber der unteren Schalenaufnahme zeitlich aufeinander folgend mit der Schale in Kontakt.

Die erfindungsgemäße Schalenverschließmaschine ist nicht auf zwei Schalenaufnahmen pro Greiferarm sowie auf zwei gegenüberliegende Greiferarme beschränkt. Es ist auch eine Kombination umfasst, bei der nur ein Greiferarm mit zwei Schalenaufnahmen auf einer Seite an die Schale positioniert wird und auf der gegenüberliegenden Seite eine Anschlagfläche vorgesehen ist.

Des Weiteren können die obere und untere Schalenaufnahme je Greiferarm auch bei einer mehrspurigen Schalenverschließmaschine zum Einsatz kommen.

Im Folgenden werden vorteilhafte Ausführungsbeispiel der Erfindung anhand einer Zeichnung näher erläutert. Im Einzelnen zeigen:
- Figur 1:: eine schematische perspektivische Ansicht einer Schalenverschließmaschine gemäß einem Ausführungsbeispiel der Erfindung,
- Figur 2:: eine schematische perspektivische Ansicht eines Greifersystems der Schalenverschließmaschine mit geöffneten Greiferarmen gemäß einem Ausführungsbeispiel der Erfindung,
- Figur 3:: eine schematische perspektivische Ansicht eines Greifersystems der Schalenverschließmaschine mit geschlossenen Greiferarmen gemäß einem Ausführungsbeispiel der Erfindung,
- Figur 4:: eine schematische perspektivische Ansicht zweier gegenüberliegender erfindungsgemäßer Greiferarme,
- Figur 5:: ein schematische Draufsicht auf zwei Schalen und eine untere Schalenaufnahme in zwei Positionen der Greiferarmbewegung.

Gleiche Komponenten werden in den Figuren durchgängig mit gleichen Bezugszeichen versehen.

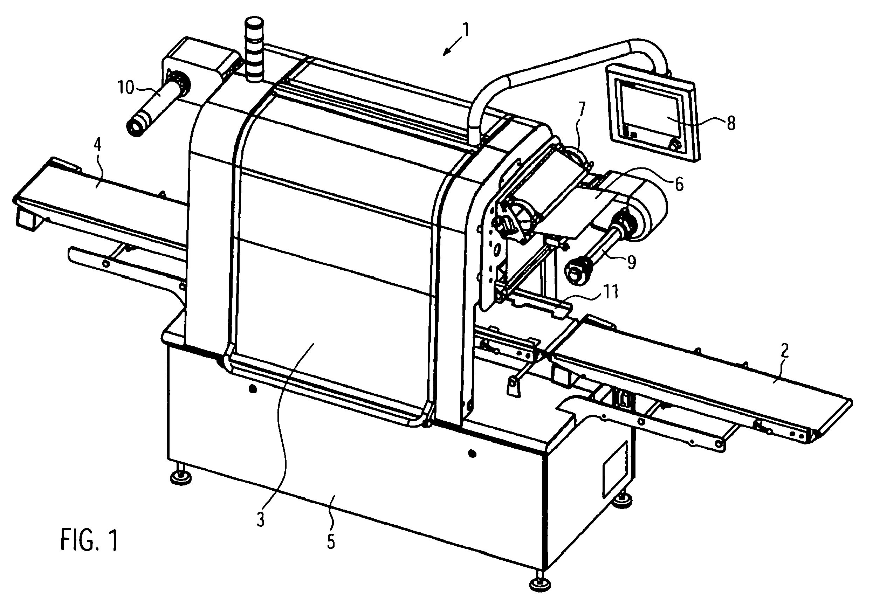

Die Figur 1 zeigt eine Schalenverschließmaschine 1 mit einem Zuführband 2, einer Arbeitsstation 3, z.B. einer Evakuier-, Siegel- und Schneidstation, einem Abführband 4, einem Maschinengestell 5, einer Folie 6, einer Folienspannvorrichtung 7, einer Bedienvorrichtung 8, einer Folienzuführeinrichtung 9, einem Folienrestaufwickler 10 und einem Greifersystem 11.

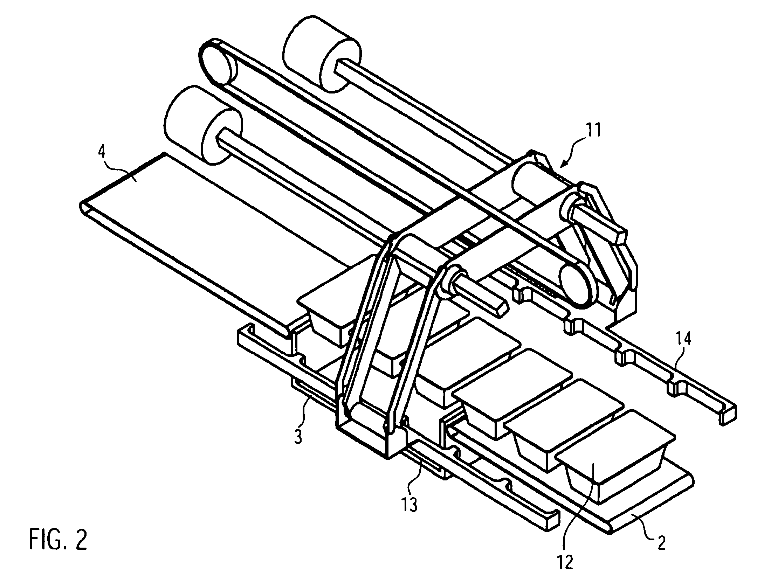

Auf dem Zuführband 2 bzw. dem Abführband 4 werden im Betrieb beispielsweise Schalen 12, wie in Figur 2 gezeigt, in die Arbeitsstation 3 hinein bzw. aus ihr heraus transportiert. In der Arbeitsstation 3 werden die Schalen 12 z.B. evakuiert, begast, versiegelt und geschnitten. Eine Folie 6 wird durch die Folienzuführeinrichtung 9 und durch die Folienspannvorrichtung 7 geführt. In der Arbeitsstation 3 ausgeführt als Siegelstation wird die Schale 12 mit der Folie versiegelt. Der abgeschnittene Folienrest wird auf dem Folienrestaufwickler 12 aufgewickelt.

Die Übergabe der Schalen 12 zwischen Zuführband 2, der Arbeitsstation 3 und dem Abführband 4 erfolgt durch das Greifersystem 11.

Zwischen dem Zuführband 2 und dem Abführband 4 ist ein Hubsystem 13 der Arbeitsstation 3 dargestellt. In den Figuren 2-3 ist das Hubsystem in abgesenkter Stellung gezeigt, wobei das Hubsystem 13 angehoben werden kann, so dass es mit dem Zuführband 2 und dem Abführband 4 auf einer Ebene liegt. Das Greifersystem 11 greift die Schalen 12, um sie von dem Zuführband 2 zu dem Hubsystem 13 und anschließend nach dem erfolgtem Arbeitsprozess der Arbeitsstation 3 von dem Hubsystem 13 zu dem Abführband 4 zu befördern. Das Zuführband 2, das Abführband 3 und das Hubsystem 13 bilden zusammen eine Ablage für die Schalen.

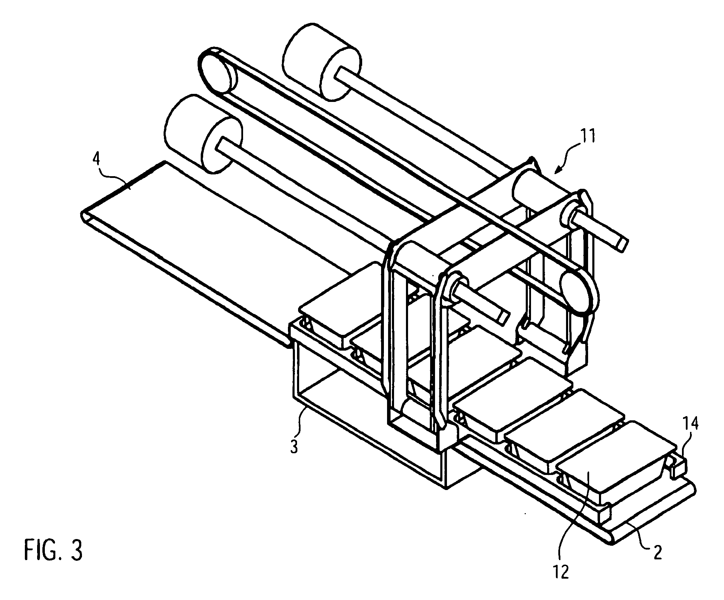

Wie in Figur 2 gezeigt, ist das Greifersystem 11 so ausgebildet, dass es eine Gruppe von Schalen 12 (in Figur 2 und 3 als drei Schalen dargestellt) aus der Arbeitsstation 3 herausnehmen und gleichzeitig eine andere Gruppe hinein befördern kann. In der Arbeitsstation 3 wird die dort hinein beförderte Gruppe von Schalen 12 gleichzeitig verarbeitet.

Das Greifersystem 11 besitzt zur Aufnahme der Schalen 12 auf beiden Seiten einen Greiferarm 14, um eine oder mehrere Schalen 12 auf der Ablage, d.h. auf dem Zuführband 2, dem Abführband 4 und dem Hubsystem 3 befindliche Schalen 12 beidseits erfassen zu können.

In Figur 2 ist die geöffnete Stellung der zwei Greiferarme 14 gezeigt, in der Figur 3 die geschlossene Stellung.

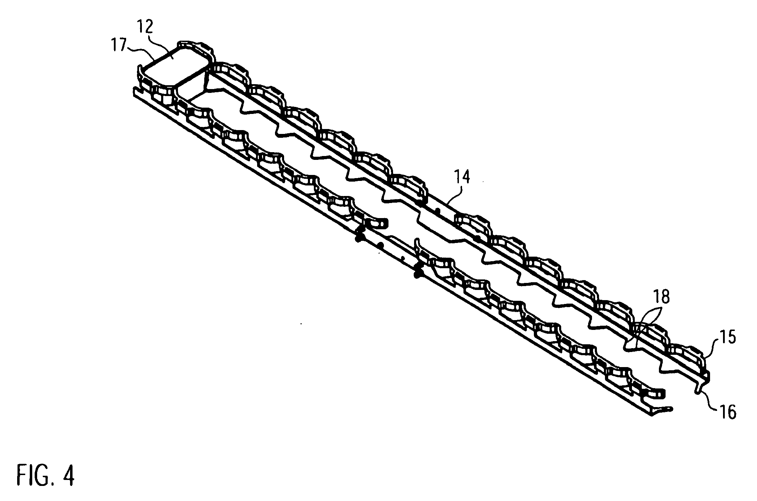

Die Figur 4 zeigt eine erfindungsgemäße Ausführung der Greiferarme 14 mit zwei Schalenaufnahmen je Seite, einer oberen Schalenaufnahme 15 und einer unteren Schalenaufnahme 16. Die obere Schalenaufnahme 15 befindet sich in der Ebene eines oberen umlaufenden Randes 17 der Schale 12 und ist somit abhängig von der Geometrie von der Seite, an der die Schale 12 aufgenommen wird. Unterschiedliche Schalenbreiten können durch die einstellbare Position der Greiferarme 14 und somit auch der oberen Schalenaufnahme 15 ohne Werkzeugwechsel aufgenommen und verarbeitet werden. Vorzugsweise ist die obere Schalenaufnahme 15 zum Greiferarm 14 adaptierbar, um einen schnellen Wechsel der oberen Schalenaufnahme 15 bei Umrüsten der Schalenverschließmaschine auf eine andere Schalengeometrie zu gewährleisten. Im geschlossenen Zustand der Greiferarme, liegt ein Formschluss von der Schale 12 am Schalenrand 17 mit der oberen Schalenaufnahme 15 vor und über eine lineare Bewegung des Greifersystems 11 in Richtung Arbeitsstation 3 wird die Gruppe von Schalen auf dem Zuführband aufliegend verschoben.

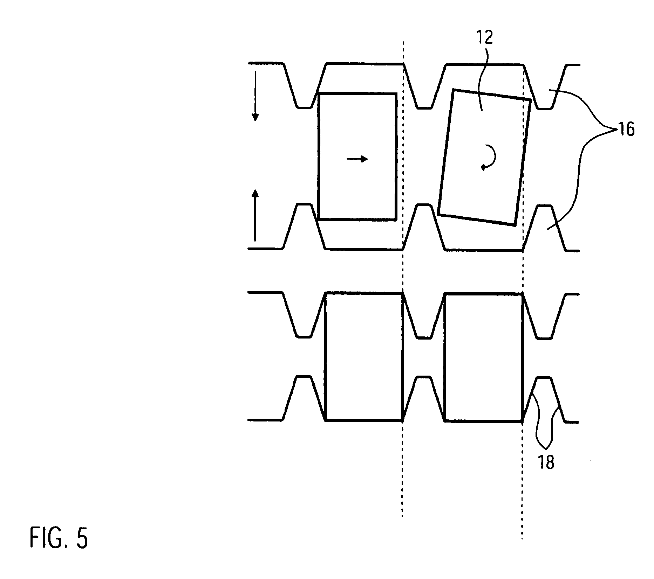

Die untere Schalenaufnahme 16 am Greiferarm 14 kann ebenso adaptiv am Greiferarm 14 angebracht sein oder den Greiferarm 14 selbst darstellen. Dies gilt ebenso alternativ für die obere Schalenaufnahme 15. Die Form bzw. der Konturverlauf der Schalen 12 zugewandten Seite weist Schrägen 18 auf, die beim Zusammenfahren der Greiferarme 14 zur Ausrichtung und/oder Korrektur der Position von verrutschten Schalen 12 mittels der unteren Schalenaufnahmen 16 dienen. Im Falle von auf dem Zuführband verrutschten Schalen, wie in Figur 5 gezeigt, stimmen deren Position und Ausrichtung nicht mehr mit der Geometrie der Schalenaufnahmen 15, 16 überein. Die Schrägen 18 an der unteren Schalenaufnahme 16 schieben die Schalen beim Zusammenfahren der Greiferarme 14 in die Zielposition, so dass sich die Schalen 12 entsprechend in der zur Aufnahme benötigten Position und Ausrichtung abschließend befinden. Sowohl versetzte wie auch um eine vertikal zum Zuführband gelegene Achse verdrehte Schalen 12 können somit in die zum Weitertransport notwendige Position und Lage bewegt werden.

Im positionierten Zustand der Greiferarme 14 befinden sich dann sowohl die obere Schalenaufnahme 15 sowie die untere Schalaufnahme 16 formschlüssig an der Schale 12 und es folgt der Transport über die lineare Bewegung vom Zuführband 2 in Richtung Arbeitsstation 3.

## Patentansprüche

1. Schalenverschließmaschine (1) mit einem Greifersystem (11), umfassend mindestens einen Greiferarm (14), zum Transportieren mindestens einer Schale (12) von einem Zuführband (2) in eine Arbeitsstation (3), **dadurch gekennzeichnet, dass** der Greiferarm (14) eine obere Schalenaufnahme (15) und eine untere Schalenaufnahme (16) aufweist, welche zum formschlüssigen Erfassen der Schale (12) konfiguriert sind.

2. Schalenverschließmaschine (1) nach Anspruch 1, **dadurch gekennzeichnet, dass** das Greifersystem (11) zwei gegenüberliegende Schalenaufnahmen (15,16) aufweist, durch welches die Schale (12) mittels Formschluss erfassbar ist.

3. Schalenverschließmaschine (1) nach Anspruch 1 oder 2, **dadurch gekennzeichnet, dass** sich zwei gegenüberliegenden Greiferarme (14) zum Erfassen der Schale (12) zueinander positioniert sind.

4. Schalenverschließmaschine (1) nach einem der vorherigen Ansprüche, **dadurch gekennzeichnet, dass** die obere und/oder untere Schalenaufnahme (15,16) parallel zueinander und/oder parallel zum Zuführband (2) sind.

5. Schalenverschließmaschine (1) nach einem der vorherigen Ansprüche, **dadurch gekennzeichnet, dass** die obere Schalenaufnahme (15) einem Schalenrand (17) zuordbar ist.

6. Schalenverschließmaschine (1) nach einem der vorherigen Ansprüche, **dadurch gekennzeichnet, dass** die untere Schalenaufnahme (16) einer unteren Hälfte der Schale (12) zuordbar.

7. Schalenverschließmaschine (1) nach einem der vorherigen Ansprüche, **dadurch gekennzeichnet, dass** mindestens eine der Schalenaufnahmen (15,16) zum Korrigieren der Position und/oder Ausrichtung vor dem Formschluss vorgesehen ist.

8. Schalenverschließmaschine (1) nach einem der vorherigen Ansprüche, **dadurch gekennzeichnet, dass** die Schalenaufnahmen (15,16) aus einem gebogenem Material und/oder mit einer Kontur versehenen, vorzugsweise gelasertem Material hergestellt sind.

9. Schalenverschließmaschine (1) nach einem der vorherigen Ansprüche, **dadurch gekennzeichnet, dass** die Schalenaufnahmen (15,16) beabstandet zueinander angeordnet sind.

10. Schalenverschließmaschine (1) nach einem der vorherigen Ansprüche, **dadurch gekennzeichnet, dass** die Schalenaufnahmen (15,16) verstellbar sind.

11. Schalenverschließmaschine (1) nach einem der vorherigen Ansprüche, **dadurch gekennzeichnet, dass** die Schalenaufnahmen (15,16) einteilig ausgebildet sind.

12. Schalenverschließmaschine (1) nach einem der vorherigen Ansprüche, **dadurch gekennzeichnet, dass** sich die obere und untere Schalenaufnahme (15,16) zeitlich aufeinander folgend mit der Schale (12) in Kontakt bringen.

## Claims

1. A tray-sealing machine (1) with a gripper system (11), comprising at least one gripper arm (14) for conveying at least one tray (12) from a conveyor belt (2) into a work station (3), **characterised in that** the gripper arm (14) has an upper tray receptacle (15) and a lower tray receptacle (16) which are configured for form-locking gripping of the tray (12).

2. A tray-sealing machine (1) according to Claim 1, **characterised in that** the gripper system (11) has two opposite tray receptacles (15,16) by which the tray (12) can be gripped by form-locking.

3. A tray-sealing machine (1) according to Claim 1 or 2, **characterised in that** the two opposite gripper arms (14) are positioned relative to one another to grip the tray (12).

4. A tray-sealing machine (1) according to any one of the preceding Claims, **characterised in that** the upper and/or lower tray receptacle (15,16) are parallel to one another and/or parallel to the conveyor belt (2).

5. A tray-sealing machine (1) according to any one of the preceding Claim, **characterised in that** the upper tray receptacle (15) can be associated with a tray rim (17).

6. A tray-sealing machine (1) according to any one of the preceding Claims, **characterised in that** the lower tray receptacle (16) can be associated with a lower half of the tray (12).

7. A tray-sealing machine (1) according to any one of the preceding Claims, **characterised in that** at least one of the tray receptacles (15,16) is provided to correct the position and/or alignment prior to the form-locking.

8. A tray-sealing machine (1) according to any one of the preceding Claims, **characterised in that** the tray receptacles (15,16) are produced from a curved material and/or from a preferably lasered material provided with a contour.

9. A tray-sealing machine (1) according to any one of the preceding Claims, **characterised in that** the tray receptacles (15,16) are arranged spaced apart from one another.

10. A tray-sealing machine (1) according to any one of the preceding Claims, **characterised in that** the tray receptacles (15,16) are adjustable.

11. A tray-sealing machine (1) according to any one of the preceding Claims, **characterised in that** the tray receptacles (15,16) are formed in one piece.

12. A tray-sealing machine (1) according to any one of the preceding Claims, **characterised in that** the upper and lower tray receptacles (15,16) are brought temporarily and successively into contact with the tray (12).

## Revendications

1. Machine de scellage de coques (1) avec un système préhenseur (11), comprenant au moins un bras préhenseur (14) pour le transport d'au moins une coque (12) d'une bande transporteuse d'alimentation (2) dans une station de travail (3), **caractérisée en ce que** le bras préhenseur (14) comporte un logement de coque supérieur (15) et un logement de coque inférieur (16) qui sont configurés pour saisir les coques (12) par engagement de formes.

2. Machine de scellage de coques (1) selon la revendication 1, **caractérisée en ce que** le système préhenseur (11) comporte deux logements de coque opposés (15, 16) qui permettent de saisir les coques (12) par engagement de formes.

3. Machine de scellage de coques (1) selon la revendication 1 ou 2, **caractérisée en ce que** deux bras préhenseurs opposés (14) sont positionnés l'un par rapport à l'autre pour saisir la coque (12).

4. Machine de scellage de coques (1) selon l'une des revendications précédentes, **caractérisée en ce que** les logements de coque supérieur et/ou inférieur (15, 16) sont parallèles entre eux et/ou parallèles à la bande transporteuse d'alimentation (2).

5. Machine de scellage de coques (1) selon l'une des revendications précédentes, **caractérisée en ce que** le logement de coque supérieur (15) peut comporter un bord de coque (17).

6. Machine de scellage de coques (1) selon l'une des revendications précédentes, **caractérisée en ce que** le logement de coque inférieur (16) peut comporter une moitié inférieure de la coque (12).

7. Machine de scellage de coques (1) selon l'une des revendications précédentes, **caractérisée en ce qu'**au moins un des logements de coque (15, 16) est prévu pour corriger la position et/ou l'alignement pour l'engagement de formes.

8. Machine de scellage de coques (1) selon l'une des revendications précédentes, **caractérisée en ce que** les logements de coque (15, 16) sont constitués en un matériau courbé et/ou pourvus d'un contour, préférablement un matériau découpé au laser.

9. Machine de scellage de coques (1) selon l'une des revendications précédentes, **caractérisée en ce que** les logements de coque (15, 16) sont agencés avec un espacement entre eux.

10. Machine de scellage de coques (1) selon l'une des revendications précédentes, **caractérisée en ce que** la position des logements de coque (15, 16) est réglable.

11. Machine de scellage de coques (1) selon l'une des revendications précédentes, **caractérisée en ce que** les logements de coque (15, 16) sont constitués d'une seule pièce.

12. Machine de scellage de coques (1) selon l'une des revendications précédentes, **caractérisée en ce que** les logements de coque supérieur et inférieur (15, 16) sont latéralement mis en contact avec les coques (12) de manière consécutive.
